# EUROPÄISCHE PATENTSCHRIFT

(11) **EP 3 688 851 B1**
(45) Veröffentlichungstag und Bekanntmachung des Hinweises auf die Patenterteilung: **03.11.2021**
(21) Anmeldenummer: 18785817.0
(22) Anmeldetag: 24.09.2018
(51) Int. Cl.: H02G 3/06, H02G 3/08

(54) **KABELVERSCHRAUBUNG**
CABLE SCREW CONNECTION
PASSE-CÂBLE À VIS

(30) Priorität: 28.09.2017 DE 102017122581
(43) Veröffentlichungstag der Anmeldung: 05.08.2020
(73) Patentinhaber: Harting Electric GmbH & Co. KG, 32339 Espelkamp (DE)
(72) Erfinder: SCHNIEDER, Stefan, 49163 Bohmte (DE)
(86) Internationale Anmeldenummer: PCT/DE2018/100807
(87) Internationale Veröffentlichungsnummer: WO 2019/063042

(56) Entgegenhaltungen:
- EP-A1- 1 524 731
- DE-A1-102010 031 345
- DE-U1-202005 009 321
- US-A- 2 479 251

## Beschreibung

Die Erfindung betrifft eine Kabelverschraubung gemäß Anspruch 1.

Derartige Kabelverschraubungen werden beispielsweise für Gehäuse mit elektrischen und/oder elektronischen Bauelementen oder für elektrische Steckverbindungseinsätze für unterschiedlichste Anwendungen auch im Starkstrom/Schwerlastbereich benötigt.

### Stand der Technik

Vielfach weisen derartige Kabelverschraubungen dabei ein Einsatzelement mit einem Außengewinde auf, das in eine mit einem entsprechenden Innengewinde versehene Öffnung eines Gehäuses eingeschraubt wird. Bei der Montage eines beispielsweise vorkonfektionierten insbesondere auch bereits mit einem Steckereinsatz versehenen Kabels kann jedoch oft insbesondere aus Platzmangel die Kabelverschraubung mit dem Kabel nicht wünschenswert einfach oder gar nicht geschraubt werden, da die Schraubung eine Drehung des Kabels innerhalb des Gehäuses verursacht. Dies ist insbesondere bei gewinkelt ausgebildeten Steckern und/oder Gehäusen problematisch, da das Kabel oder eine Litze mit Kontakt nur schwer oder gar nicht montiert werden können, was insbesondere bei Anwendungen im Starkstrom/Schwerlastbereich der Fall ist. Die in diesen Anwendungen beispielsweise in Kraftwerken, im Eisenbahn- und Maschinenbereich, etc. zum Einsatz kommenden Kabel können beispielsweise für Stromstärken von 100 bis 1400 Ampere und mehr ausgelegt sein und können dabei Querschnitte von z.B. 10 mm² bis 300mm² aufweisen, so dass sie sich nur sehr schwer verbiegen lassen. Das Kabel und/oder die Litze werden nämlich dabei durch die Kabelverschraubung oder die Gewindebohrung in das Gehäuse eingeführt und können dann oft aufgrund fehlendes Platzes und/oder fehlender Flexibilität des Kabels oder der Litze nicht mehr in die gewünschte Position gebracht werden.

Die DE 103 11 473 B3 versucht diesem Problem für andere Anwendungen zu begegnen, indem ein Steckverbindergehäuse aus zwei längsgeteilten und verbindbaren Halbschalen bereitgestellt wird, wobei die Trennebene der Halbschalen durch einen Kabelstutzen mit einer Gehäuseöffnung verläuft, und die Kabelverschraubung ein ebenfalls aus zwei zusammenfügbaren Teilelementen bestehendes Schraubelement aufweist, mittels dem nach Einlegen und Montage eines vorkonfektionierten Kabels die Öffnung des zusammengefügten Gehäuses mit der Kabelverschraubung verschraubt wird. Die Ausbildung eines hierfür benötigten, mit dem Schraubelement korrespondierenden Innengewindes in der Öffnung der Gehäusehalbschalen ist jedoch nachteilhaft aufwendig und dementsprechend kostspielig.

Aus der DE 20 2005 009 321 U1 ist eine Klemmverschraubung eines Kabels mit einer Schraubhülse an einem Wanddurchbruch eines Gehäuses bekannt, bei der ein Lösen oder Manipulieren auch auf der Seite der Wand verhindert sein soll, die der eigentlichen Verschraubung abgewandt ist. Hierzu weist die Klemmverschraubung einen Flansch auf, der die Schraubhülse an der Innenseite der Wand umgreift und mittels zusätzlicher Befestigungselemente an der Wand derart festgelegt wird, dass die Schraubhülse weder in axialer noch in Drehrichtung verstellt werden kann. Der Flansch ist ein nachträglich an der Schraubhülse anbringbares Teil, an dem die zusätzlichen Befestigungselemente angreifen. Insbesondere auch aufgrund ihrer Vielzahl von an der Innenseite der Wand zu montierenden Einzelteile, gestaltet sich die Montage der Klemmverschraubung nachteilhaft aufwendig. Außerdem ist die Klemmverschraubung für ein bereits vorkonfektioniertes Kabel nicht geeignet.

Aus der EP 1 524 731 A1 ist ein Steckergehäuse mit einer Kabelabdichtung bekannt, das mit einem vorkonfektionierten Kabel bestückt werden und hohe Anforderungen an die Dichtigkeit einhalten können soll. Das Steckergehäuse weist ein erstes Gehäuseteil und zweites Gehäuseteil mit einen Kabeldurchgang für ein Kabel aus dem Inneren des Steckergehäuses nach außen auf. Zur Bereitstellung einer Dichtung ist ein im Kabeldurchgang angeordneter Dichteinsatz vorgesehen, der mit einem Schlitz versehen ist, so daß er auf ein vorkonfektioniertes Kabel aufgesteckt werden kann. An den Kabeldurchgang schließt sich zum Inneren des Steckergehäuses hin eine Kabelschelle mit einer Metallklammer an, von der im ersten Gehäuseteil ein Widerlager ausgebildet ist. Die Montage und Fixierung des Kabels an dem Kabeldurchgang ist demnach wie bei der vorstehenden aus der DE 20 2005 009 321 U1 bekannten Klemmverschraubung ebenfalls nachteilhaft aufwendig.

Das Deutsche Patent- und Markenamt hat in der Prioritätsanmeldung zu vorliegender Anmeldung den folgenden Stand der Technik recherchiert: DE 10 2010 031 345 A1, DE 20 2005 009 321 U1, US 2016/0006162 A1, US 5,679,924 A

### Aufgabenstellung

Aufgabe der Erfindung ist daher eine kostengünstige, einfach und flexibel handhabbare und zuverlässige Kabelverschraubung insbesondere auch mit einem diesbezüglichen Verfahren zur Kabelverschraubung bereitzustellen, die für viele Anwendungen und Kabel insbesondere auch im Starkstrom/Schwerlastbereich geeignet sind. Dabei ist insbesondere Aufgabe einen für die Kabelverschraubung geeigneten Kabelverschraubungseinsatz und ein geeignetes Gehäuse und insbesondere ein Steckergehäuse bereitzustellen, das aus zusammenfügbaren Gehäuseschalen bestehen kann. In diesem Zusammenhang ist es weiterhin Aufgabe eine für ein geeignetes Gehäuse geeignete Gehäuseschale bereitzustellen.

Die Aufgabe wird mit den Merkmalen der unabhängigen Ansprüche gelöst. Vorteilhafte Ausgestaltungen der Erfindung sind in den Unteransprüchen und/oder der nachfolgenden Beschreibung angegeben.

Die Erfindung betrifft eine Kabelverschraubung mit Kabelverschraubungseinsatz und korrespondierend ausgebildeter Gehäuseschale, eines wenigstens zwei Gehäuseschalen umfassenden Gehäuses, deren Trennebene durch die Gehäuseöffnung verläuft, zum Befestigen des Kabelverschraubungseinsatzes an dem Gehäuse. Dabei umfasst der Kabelverschraubungseinsatz ein Einsatzelement, an dem ein Flansch derart ausgebildet ist, dass der Kabelverschraubungseinsatz beim Einsatz in wenigstens eine der Gehäuseschalen verdrehsicher in der Gehäuseschale angeordnet ist. Mittels der vorstehenden vorteilhaft verdrehsicheren Anordnung des Kabelverschraubungseinsatzes lediglich durch Einlegen seines Einsatzelementes in eine Gehäuseschale ist es ermöglicht, mittels einer außerhalb des Gehäuses auf einem Gewinde des Einsatzelementes angeordneten Gegenmutter gegen eine äußere Wand in der Umgebung der Gehäuseöffnung des Gehäuses zu schrauben und dadurch den Kabelverschraubungseinsatz an dem Gehäuse zu fixieren, ohne dass sich ein in dem Kabelverschraubungseinsatz angeordnetes Kabel bei der Verschraubung der Gegenmutter innerhalb des Gehäuses mitdreht.

Dies ist besonders vorteilhaft für den Einsatz eines vorkonfektionierten Kabels, das bereits mit weiteren Elementen wie etwa einem Steckereinsatz versehen sein kann, und/oder für ein Gehäuse mit einer Geometrie, die nur beschränkte, vorbestimmte Lagen des Kabels zulässt, wie beispielsweise ein abgewinkeltes Gehäuse. Außerdem entfällt somit eine nachteilhaft aufwendige Herstellung eines Innengewindes in den Gehäuseöffnungen getrennter Gehäuseschalen.

Erfindungsgemäß ist an dem Flansch eine Kontur ausgebildet, die mit einer Innenkontur bzw. Kontur wenigstens einer der Gehäuseschalen formschlüssig und verdrehsicher korrespondiert, so dass sichergestellt ist, dass die verdrehsichere Anordnung des Flansches in der Gehäuseschale kein Spiel zulässt. Eine hierfür geeignete Kontur des Flansches ist dabei insbesondere vorteilhaft auf einem umlaufenden Rand des Flansches ausgebildet.

Außerdem kann die Kontur des Flansches auf vielfältige Weise ausgebildet sein. Beispielsweise kann die Kontur quadratisch, oval oder als mit einem Spalt versehener Kreis, etc. ausgebildet sein.

Vorteilhaft kann die Kontur des Flansches kreisförmig mit wenigstens einer Abflachung ausgebildet sein, was die Möglichkeit einer schienenartigen Einführung des Flansches in eine korrespondierende Innenkontur einer Gehäuseschale mit entsprechender Anordnung der Abflachung eröffnet. Auf diese Weise wird die Handhabung und Montage und insbesondere auch die automatisierte Montage von Kabelverschraubungseinsatz und Gehäuse besonders einfach und erleichtert.

Besonders vorteilhaft kann hierfür der Flansch kreisförmig mit zwei symmetrischen einander gegenüberliegenden Abflachungen ausgebildet sein, die beide die vorstehenden Vorteile ermöglichen. Außerdem wird hierdurch aufgrund der Symmetrie des Flansches eine wünschenswerte Flexibilität der Einführung des Flansches in die Gehäuseschale vorteilhaft bereitgestellt, da nicht nur eine Möglichkeit dessen Einführung besteht.

Geeigneter Weise kann das Einsatzelement des Kabelverschraubungseinsatzes außerdem außenseitig des Gehäuses mit einer Stufung versehen sein, die den Rand der Gehäuseöffnung überragt. Dabei korrespondiert die Stufung derart mit dem innenseitig den Rand der Gehäuseöffnung überragenden Flansch, dass mittels des in das Gehäuse eingelegten Einsatzelementes im Bereich der Gehäuseöffnung eine vorteilhaft kompakte und stabile Verschachtelung von Einsatzelement und Gehäuse bereitgestellt ist.

Ein erfindungsgemäßer Kabelverschraubungseinsatz kann beispielsweise aus Kunststoff oder Metall ausgebildet sein. Geeigneter Weise kann an dem Flansch des Einsatzelementes des Kabelverschraubungseinsatzes ein Stutzen vorgesehen sein, der sich in das Innere des Gehäuses erstreckt. Dies ist besonders vorteilhaft für einen metallisch ausgebildeten Kabelverschraubungseinsatz und ein metallisch ausgebildetes Gehäuse, da an dem Stutzen eine elektrisch leitende Abschirmung eines in dem Kabelverschraubungseinsatz angeordneten und sich in das Gehäuse erstreckenden Kabels auf einfache Weise und wirkungsvoll befestigt werden kann. Hierdurch wird eine wirkungsvolle Abschirmung des Kabelverschraubungseinsatzes und des Gehäuses ermöglicht.

Zur besonders einfachen und dennoch wirkungsvollen Dichtung des Gehäuses ist vorteilhaft an dem Einsatzelement in der Nachbarschaft zu dem Flansch ein ringförmiges Dichtelement zur innenseitigen Abdichtung der Gehäuseöffnung angeordnet. Diese Anordnung und Ausbildung des Dichtelements ist besonders vorteilhaft, nachdem ein alternativ außenseitig angeordnetes Dichtelement, das mit der Gegenmutter zusammenwirkt, vergleichsweise größer ausgebildet werden müsste. Auf diese Weise wird ein besonders kompakter und außerdem besonders einfach handhabbarer mit dem Dichtelement versehener insbesondere auch vorkonfektionierter Kabelverschraubungseinsatz ermöglicht. Hierbei kann das Dichtelement geeigneter Weise außerdem in einer Nut des Einsatzelementes angeordnet sein, so dass es vorteilhaft ortsfest an seiner bestimmungsgemäßen Position positioniert ist.

Für eine besonders wirkungsvolle Dichtung kann dabei außerdem an einem inneren Rand der Gehäuseöffnung eine Abschrägung zur teilweisen Beherbergung des Dichtelements vorgesehen sein. Die Abschrägung schützt dabei das Dichtelement vorteilhaft vor einer möglichen Beschädigung bei der Montage des Kabelverschraubungseinsatzes und insbesondere bei der Verschraubung der Gegenmutter, bei der nämlich der Flansch gegen die innenseitige Wand in der Umgebung der Gehäuseöffnung gezogen wird und dabei das Dichtelement gegen diese Wand und auch gegen den Rand der Gehäuseöffnung drückt. Die vorliegende Erfindung betrifft demnach außerdem insbesondere ein für eine erfindungsgemäße Kabelverschraubung geeignetes und mit ihr zusammenwirkendes Gehäuse, was nachfolgend näher beschrieben wird.

Geeigneter Weise kann an dem Gewinde des Einsatzelementes weiterhin eine Überwurfmutter vorgesehen sein, die ein weiteres Dichtelement beherbergt und mit ihm zur Abdichtung des außenseitig des Gehäuses angeordneten Bereichs des Kabelverschraubungseinsatzes zusammenwirkt. Hierbei kann das Gewinde vorteilhaft einen ersten Gewindebereich umfassen, der mit der Gegenmutter zusammenwirkt, und einen zweiten Gewindebereich umfassen, der mit der Überwurfmutter zusammenwirkt, wobei der erste und zweite Gewindebereich vorteilhaft voneinander beabstandet sein können und/oder aus verschiedenen Gewinden bereitgestellt sein können, wodurch bei der Montage eine Kollision von Gegenmutter und Überwurfmutter ausgeschlossen ist.

Ein für eine erfindungsgemäße Kabelverschraubung und insbesondere einen erfindungsgemäßen Kabelverschraubungseinsatz geeignetes Gehäuse umfasst dabei wie vorstehend beschrieben geeigneter Weise insbesondere eine Gehäuseöffnung und wenigstens zwei Gehäuseschalen, deren Trennebene durch die Gehäuseöffnung verläuft. Geeigneter Weise ist die vorstehend beschriebene Innenkontur wenigstens einer Gehäuseschale, die mit der Kontur des Flansches des Einsatzelementes des Kabelverschraubungseinsatzes korrespondiert, benachbart zu der Gehäuseöffnung vorgesehen. Dabei kann die Innenkontur vorteilhaft auf einer Abstufung des Rands der Gehäuseöffnung wenigstens einer der Gehäuseschalen ausgebildet sein.

Für ein vorstehendes erfindungsgemäßes Gehäuse ist dabei insbesondere ein Steckergehäuse für den Einsatz eines elektrischen Kabels geeignet, das wie vorstehend beschrieben insbesondere bereits mit einem Steckereinsatz vorkonfektioniert sein kann.

Die vorliegende Erfindung betrifft weiterhin eine für ein vorstehendes Gehäuse geeignete Gehäuseschale, in der benachbart zu der Abstufung und dem Flansch des Einsatzelementes des Kabelverschraubungseinsatzes wenigstens ein Vorsprung vorgesehen ist, der im Zusammenwirken mit der innenseitigen Wand des Gehäuses in der Umgebung der Gehäuseöffnung eine schienenartige und vorteilhaft kippsichere Führung des Flansches bereitstellt. Dabei kann der Vorsprung außerdem geeigneter Weise eine Bohrung zur Verschraubung zweier Gehäuseschalen umfassen. Eine derartig ausgebildete Gehäuseschale ist insbesondere vorteilhaft geeignet für den vorstehend beschriebenen besonders geeigneten kreisförmig mit zwei gegenüberliegenden Abflachungen ausgebildeten Flansch und der ebenfalls vorstehend beschriebenen mit dem Flansch korrespondierenden Innenkontur, die geeigneter Weise auf der Abstufung ausgebildet ist.

Für eine besonders einfache und flexible Handhabung und Montage ist dabei die Gehäuseschale als erste Halbschale des Gehäuses ausgebildet, deren Trennebene vorteilhafterweise mittig durch die Gehäuseöffnung verläuft, und die mit einer im Wesentlichen gleichartig ausgebildeten zweiten Gehäuseschale des Gehäuses korrespondiert, wobei mittels Zusammenfügen der ersten und zweiten Gehäuseschale wenigstens in der Umgebung des Einsatzelementes des Kabelverschraubungseinsatzes das vollständige Gehäuse bereitgestellt ist. Ein aus zwei gleichartig ausgebildeten Gehäusehalbschalen ausgebildetes Gehäuse ist besonders einfach und kostengünstig in seiner Herstellung und Montage und flexibel in der Montage des Kabelverschraubungseinsatzes mit dem Gehäuse. Außerdem ermöglicht die Ausbildung der vorstehenden Innenkontur in beiden Gehäuseschalen einen besonders verdrehsicheren Sitz des Flansches und damit des Kabelverschraubungseinsatzes in dem Gehäuse.

Wie vorstehend gesagt ist es mittels der vorteilhaft verdrehsicheren Anordnung des Kabelverschraubungseinsatzes lediglich durch Einsetzen seines Einsatzelementes in eine Gehäuseschale in einem ersten Schritt, und mittels Verschrauben einer auf einem Gewinde des Einsatzelementes angeordneten Gegenmutter gegen eine äußere Wand in der Umgebung der Gehäuseöffnung in einem weiteren Schritt vorteilhaft ermöglicht, den Kabelverschraubungseinsatz an dem Gehäuse zu fixieren, ohne dass sich ein in dem Kabelverschraubungseinsatz angeordnetes Kabel bei der Verschraubung der Gegenmutter innerhalb des Gehäuses mitdreht.

Insbesondere auch vor dem Einsetzen des Einsatzelements in die Gehäuseschale und/oder daran anschließend kann dabei das Kabel und/oder eine Litze und/oder ein Steckereinsatz an dem Kabel vorteilhaft flexibel in eine vorbestimmte Position gebracht und montiert werden.

Weiterhin betrifft die Erfindung ein Verfahren zur Kabelverschraubung eines Kabelverschraubungseinsatzes, in den bereits ein Kabel eingeführt ist, zum Einsatz in eine Gehäuseöffnung eines wenigstens zwei Gehäuseschalen umfassenden Gehäuses, deren Trennebene durch die Gehäuseöffnung verläuft, zum Befestigen des

Kabelverschraubungseinsatzes an dem Gehäuse, mit den Schritten:
- Montage des Kabels und/oder einer Litze und/oder eines Kontakts und/oder eines an dem Kabel bereits vorkonfektionierten Steckereinsatzes gemäß ihres bestimmungsgemäßen Einsatzes in einem ersten Schritt;
- Positionierung des Kabels in eine vorbestimmte Lage in einem zweiten Schritt;
- Einlegen des Kabelverschraubungseinsatzes in die Gehäuseöffnung einer Gehäuseschale des Gehäuses in einem dritten Schritt;
- Verdrehsichere Anordnung eines Flansches des Kabelverschraubungseinsatzes mit einer Kontur in Kontakt zu einer Innenkontur der Gehäuseschale in einem vierten Schritt;
- Zusammenfügen der Gehäuseschale mit wenigstens einer weiteren Gehäuseschale in einem fünften Schritt;
- Verschraubung einer auf dem Kabelverschraubungseinsatz angeordneten Gegenmutter, so dass der Kabelverschraubungseinsatz an dem Gehäuse fixiert wird in einem sechsten Schritt.

Hierbei ist die Verwendung eines vorstehend beschriebenen Kabelverschraubungseinsatzes, und/oder eines vorstehend beschriebenen Gehäuses und/oder einer vorstehend beschriebenen Gehäuseschale besonders geeignet. Somit umfasst das erfindungsgemäße Verfahren gleichfalls die vorstehend beschriebenen Merkmale und macht von deren Vorteilen Gebrauch.

Das vorstehende Verfahren, der vorstehende Kabelverschraubungseinsatz, das vorstehende Gehäuse sowie die vorstehende Gehäuseschale sind dabei besonders für Anwendungen im Starkstrom/Schwerlastbereich und deren Kabel geeignet. Wie eingangs erwähnt können die in diesen Anwendungen beispielsweise in Kraftwerken, im Eisenbahn- und Maschinenbereich, etc. zum Einsatz kommenden Kabel beispielsweise für Stromstärken von 100 bis 1400 Ampere und mehr ausgelegt sein und können dabei Querschnitte von z.B. 10 mm² bis 300 mm² aufweisen, weshalb sie sich nur sehr schwer verbiegen lassen. Mittels einer verdrehsicheren Kabelverschraubung einer vorstehenden Ausführung der Erfindung ist es vorteilhaft möglich dies vor Einsatz eines Kabelverschraubungseinsatzes mit eingeführtem Kabel außerhalb des Gehäuses vorzunehmen und somit innerhalb des Gehäuses nicht erforderlich, weshalb die erfindungsgemäße Kabelverschraubung insbesondere für gewinkelt ausgebildete Gehäuse geeignet ist.

Dabei ist es dem Fachmann klar, dass insbesondere bei vergleichsweise kleiner dimensionierten Kabeln mit einem entsprechend kleiner dimensionierten Kabelverschraubungseinsatz die Verfahrensschritte auch in einer anderen Reihenfolge sinnvoll abgearbeitet werden können.

Beispielsweise kann der vorstehende dritte und der vierte Schritt des Verfahrens insbesondere bei der Verwendung des vorstehenden erfindungsgemäßen Kabelverschraubungseinsatzes in einem einzigen Schritt ausgeführt werden, was die Montage besonders einfach macht. Weiterhin kann in geeigneter Weise der vorstehende dritte und vierte Schritt vor dem vorstehenden ersten Schritt ausgeführt werden, was die Flexibilität für den Einsatz des Kabelverschraubungseinsatzes für eine Vielzahl unterschiedlich ausgebildeter Gehäuse und Anwendungen ermöglicht.

### Ausführungsbeispiele

Ausführungsbeispiele der Erfindung sind in den Zeichnungen dargestellt und werden im Folgenden näher erläutert. Es zeigen:
- Figur 1a und 1b: jeweils eine perspektivische Darstellung eines vollständigen bzw. unvollständigen Kabelverschraubungseinsatzes nach einer Ausführung der Erfindung;
- Figur 1c: einen Schnitt durch die Ausführung von Figur 1a und 1b jeweils entlang der Linie R-R von Figur 1a und 1b;
- Figur 2a: eine perspektivische Darstellung eines Ausschnitts einer Gehäuseschale nach einer Ausführung der Erfindung;
- Figur 2b: einen Schnitt durch die Gehäuseschale von Figur 2a entlang der Linie R-R von Figur 2a;
- Figur 3a: den Kabelverschraubungseinsatz von Figur 1a und 1b in die Gehäuseschale von Figur 2b eingelegt;
- Figur 3b: ein zusammengesetztes Gehäuse nach einer Ausführung der Erfindung mit dem Kabelverschraubungseinsatz und der Gehäuseschale von Figur 3a;
- Figur 4a: einen Längsschnitt durch die Ausführung von Figur 3b entlang der Linie L-L von Figur 3b;
- Figur 4b: einen Querschnitt durch die Ausführung von Figur 3b entlang der Linie R-R von Figur 3b;
- Figur 4c: eine vergrößerte Darstellung des Ausschnitts A1 von Figur 4a; und
- Figur 5a und 5b: jeweils ein schematisches Diagramm der Schritte einer Ausführung des erfindungsgemäßen Verfahrens

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

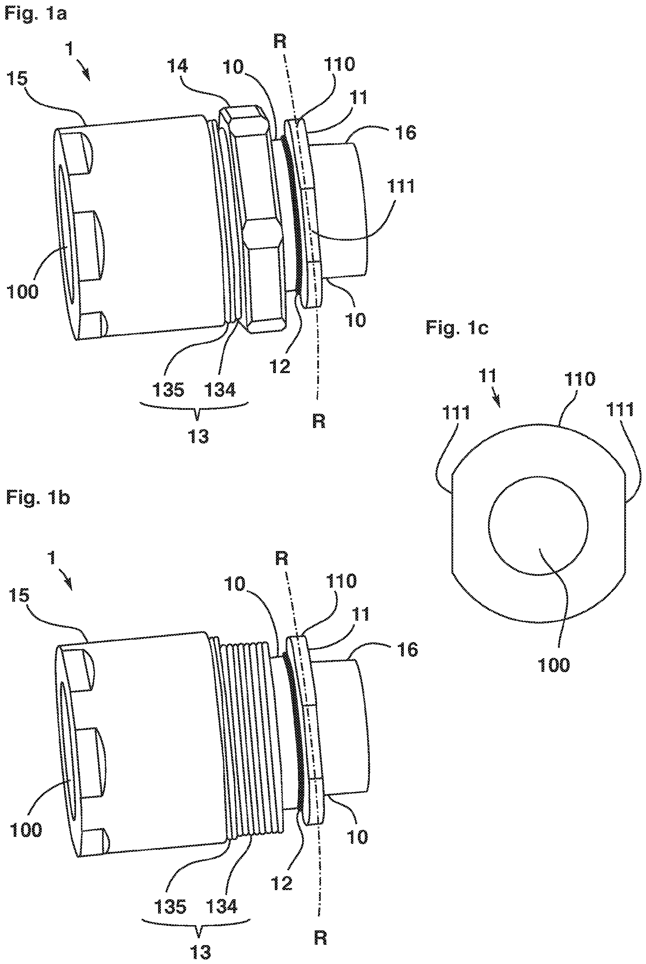

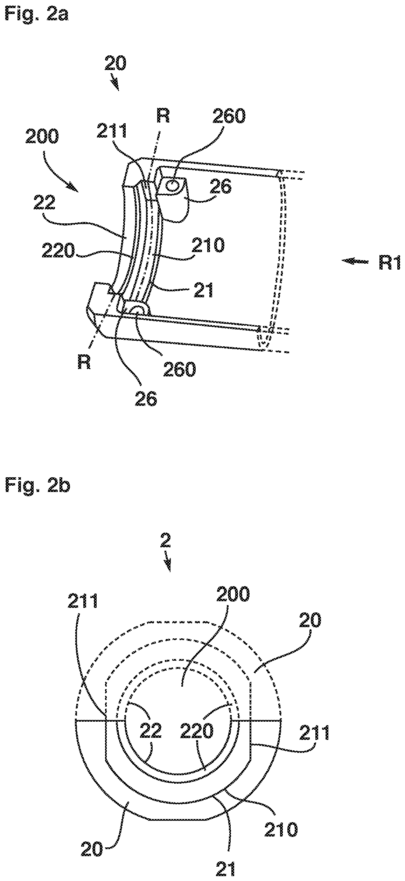

Figur 1a zeigt eine perspektivische Darstellung eines Kabelverschraubungseinsatzes 1 nach einer Ausführung der Erfindung mit einem Einsatzelement 10, an dessen für die Anordnung innerhalb einer Gehäuseschale 20 eines Gehäuses 2 vorgesehenen Bereichs ein Flansch 11 ausgebildet ist. Ein vorstehendes für den Kabelverschraubungseinsatz 1 geeignetes Gehäuse 2 mit einer Gehäuseschale 20 wird nachfolgend unter Bezugnahme auf Figur 2a und 2b beschrieben.

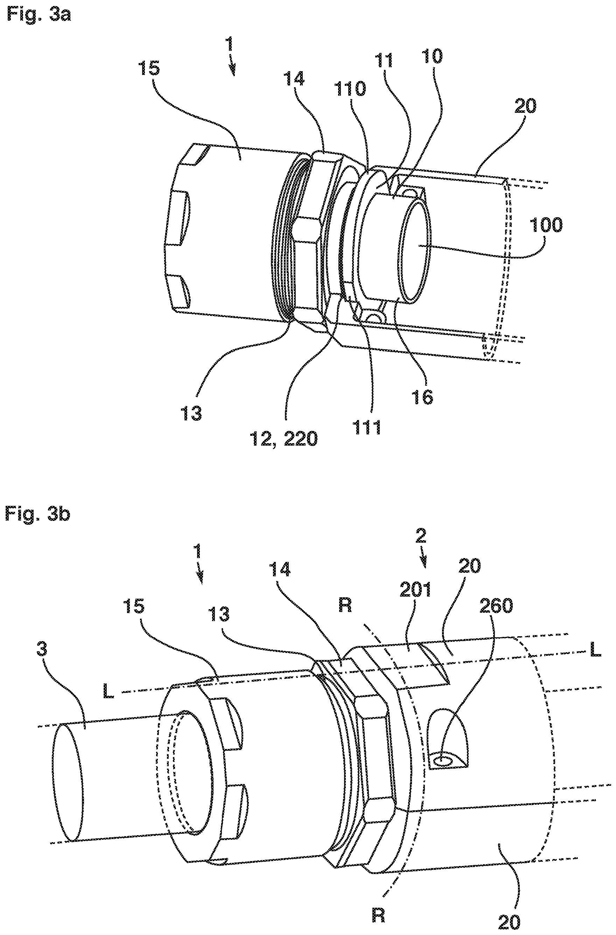

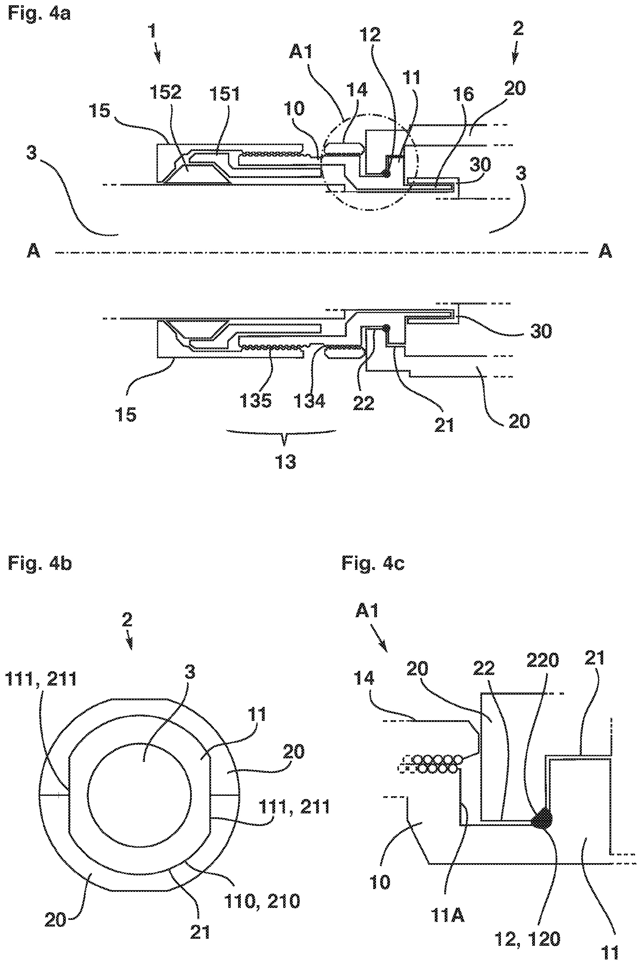

Das Einsatzelement 10 trägt in der Nachbarschaft des Flansches 11 ein ringförmiges Dichtelement 12 zur Abdichtung einer Gehäuseöffnung 200 des Gehäuses 2, in die der Kabelverschraubungseinsatz 1 eingesetzt ist, was nachfolgend unter Bezugnahme auf Figur 3a und 4a beschrieben wird. An dem für die Anordnung außerhalb des Gehäuses 2 vorgesehenen Bereich des Einsatzelementes 10 des Kabelverschraubungseinsatzes 1 ist ein Gewinde 13 ausgebildet, das mit einer Gegenmutter 14 zusammenwirkt.

An dem Gewinde 13 des Einsatzelementes 10 ist außerdem eine ebenfalls mit dem Gewinde 13 zusammenwirkende Überwurfmutter 15 angeordnet, deren Funktion nachfolgend unter Bezugnahme auf Figur 4a beschrieben wird. Die in Längsrichtung des Kabelverschraubungseinsatzes 1 vorgesehene durchgehende Öffnung 100 ist zur Beherbergung eines Kabels 3 vorgesehen, was nachfolgend unter Bezugnahme auf Figur 3b und 4a näher beschrieben wird.

An dem für die Anordnung innerhalb des Gehäuses 2 vorgesehenen Bereich des Einsatzelementes 10 des Kabelverschraubungseinsatzes 1 ist außerdem ein Stutzen 16 ausgebildet, der sich ausgehend von dem Flansch 11 in das Innere des Gehäuses 2 erstreckt. Insbesondere das Einsatzelement 10, der Flansch 11, der Stutzen 16 und die Gegenmutter 14 des Kabelverschraubungseinsatzes 1 dieser Ausführung der Erfindung ist außerdem beispielhaft und vorteilhaft aus einem elektrisch leitenden Material ausgebildet, was nachfolgend unter Bezugnahme auf Figur 4a erläutert wird.

Figur 1b zeigt den Kabelverschraubungseinsatz 1 von Figur 1a ohne die Gegenmutter 14, zur deutlicheren Darstellung der Unterteilung des Gewindes 13 in einen ersten Gewindebereich 134, der mit der Gegenmutter 14 zusammenwirkt, und in einen zweiten Gewindebereich 135, der mit der Überwurfmutter 15 zusammenwirkt. Der erste und zweite Gewindebereich 134 und 135 sind außerdem auf dem Einsatzelement 10 geringfügig voneinander beabstandet, wodurch vorteilhaft eine Kollision von Gegenmutter 14 und Überwurfmutter 15 ausgeschlossen wird.

Figur 1c zeigt einen Schnitt durch die Ausführung von Figur 1a und 1b jeweils entlang der Linie R-R von Figur 1a und 1b, die sich entlang des umlaufenden Randes R des Flansches 11 erstreckt. Die Kontur 110 des Flansches 11 ist bei dieser Ausführung beispielhaft und vorteilhaft als mit zwei gegenüberliegenden Abflachungen 111 versehener Kreis ausgebildet. Die Funktionsweise dieser Ausbildung wird nachfolgend unter Bezugnahme auf Figur 2a, b und Figur 3a beschrieben.

Figur 2a zeigt eine perspektivische Darstellung eines Ausschnitts einer Gehäuseschale 20 nach einer Ausführung der Erfindung, die geeigneter Weise als Gehäusehalbschale ausgebildet ist, und die für ein Gehäuse 2 nach einer Ausführung der Erfindung geeignet ist. Die Gehäuseschale 20 umfasst einen Teil einer mittig geteilten kreisförmigen Gehäuseöffnung 200 des Gehäuses 2, deren Rand 22 sich in das Innere des Gehäuses 2 erstreckt. An den Rand 22 anschließend ist im Inneren des Gehäuses 2 eine Abstufung 21 ausgebildet, deren Kontur die Innenkontur 210 der Gehäuseschale 20 ist und mit der vorstehend anhand von Figur 1c beschriebenen Kontur 110 des Flansches 11 derart korrespondierend ausgebildet ist, dass der in die Gehäuseschale 20 eingelegte Flansch 11 des Kabelverschraubungseinsatzes 1 formschlüssig und verdrehsicher in der Gehäuseschale 20 angeordnet ist.

Benachbart zu der Abstufung 21 sind zwei geeigneter Weise gegenüberliegende Vorsprünge 26 mit Bohrungen 260 zur Bereitstellung einer dauerhaften Schraubverbindung zweier gleichartiger als Halbschalen ausgebildeter Gehäuseschalen 20 vorgesehen. Die Anordnung der Vorsprünge 26 an der Abstufung 21 stellt in Zusammenwirken mit der innenseitigen Wand in der Umgebung der Gehäuseöffnung 200 eine schienenartige Struktur bereit und gestattet dabei ein besonders einfaches und kippsicheres Einlegen des Einsatzelementes 10 in die Gehäuseschale 20. Bei einem eingelegten Einsatzelement 10 sind die Vorsprünge 26 dabei nämlich innenseitig benachbart zu dessen Flansch 11 angeordnet, womit gehäuseinnenseitig eine vorteilhafte Verschachtelung von Vorsprung 26, Flansch 11 und Rand 22 bereitgestellt ist. Hier wird diesbezüglich auch auf die Darstellung von Figur 3a verwiesen.

Die Innenkontur 210 der zu dem Rand 22 der Gehäuseschale 20 benachbarten Abstufung 21 ist in Figur 2b dargestellt, die einen Schnitt durch die Gehäuseschale 20 entlang der Linie R-R von Figur 2a aus der Blickrichtung des Pfeils R1 von Figur 2a zeigt. Zusammen mit der vorteilhaft als Gehäusehalbschale ausgebildeten Gehäuseschale 20 von Figur 2a ist dabei in Figur 2b mittels der gestrichelten Linie außerdem eine im Wesentlichen symmetrisch ausgebildete zweite Gehäusehalbschale eines entsprechend zusammengesetzten Gehäuses 2 dargestellt. Die Innenkontur 210 der Abstufung 21 des Gehäuses 2 ist dabei geeigneter Weise und vorteilhaft korrespondierend zu der vorstehenden Kontur 110 des Flansches 11 als mit entsprechend gegenüberliegenden Abflachungen 211 versehener Kreis ausgebildet. Bei einem in das zusammengefügte Gehäuse 2 eingesetzten Einsatzelement 10 ist dabei die vollständige Kontur 110 mit den gegenüberliegenden Abflachungen 111 der Kontur 110 des Flansches 11 formschlüssig und verdrehsicher in die Innenkontur 210 der Abstufung 21 eingesetzt, was auch nachfolgend unter Bezugnahme von Figur 3a und 4b erläutert wird.

Figur 3a zeigt den in die Gehäuseschale 20 von Figur 2b eingelegten Kabelverschraubungseinsatz 1 von Figur 1a und 1b mit dem Einsatzelement 10, mit dem sich nach innen in die Gehäuseschale 20 erstreckenden Stutzen 16 und dem in der Nachbarschaft des Flansches 11 angeordneten Dichtelement 12, das benachbart zu einer Abschrägung 220 des Rands 22 der Gehäuseöffnung 200 angeordnet ist. Mittels Verschraubung der Gegenmutter 14 kann somit der den Rand 22 der Gehäuseöffnung 200 vollständig überragende Flansch 11 mit dem Dichtelement 12 gegen die innenseitige Wand der Gehäuseschale 20 in der Umgebung des Rands 22 gezogen werden und dabei der Kabelverschraubungseinsatz 1 an dem Gehäuse 2 fixiert werden. Dabei wird das Gehäuse 2 außerdem mittels des Dichtelements 12 abgedichtet.

Figur 3b zeigt den vollständig montierten Kabelverschraubungseinsatz 1 von Figur 3a mit den aus zwei im wesentlichen gleichartigen Halbschalen ausgebildeten Gehäuseschalen 20 und außerdem mit einem Kabel 3. Dabei ist die Gegenmutter 14 gegen das Gehäuse 2 verschraubt, was nachfolgend anhand von Figur 4a beschrieben wird, die einen Längsschnitt durch den Kabelverschraubungseinsatz 1 und das Gehäuse 2 entlang der Linie L-L zeigt. An dem äußeren Rand des Gehäuses 2 sind zur Erleichterung der Handhabung der Montage und insbesondere der Verschraubung der Gegenmutter 14 geeignete Abflachungen 201 des im wesentlichen zylindrischen Gehäuses 2 ausgebildet, die eine einfache und stabile Fixierung des Gehäuses 2 ermöglichen.

An dieser Stelle sei hier gesagt, dass in den Figuren des Gehäuses 2 und der Gehäuseschale 20 jeweils nur deren Ausschnitte in der Umgebung der Gehäuseöffnung 200 dargestellt sind, wobei ein vollständiges Gehäuse 2 vielfältig ausgebildet sein kann. Beispielsweise kann ein vollständiges Gehäuse 2 zylindrisch ausgebildet sein, oder es kann sich bei dem in den Figuren gezeigten Ausschnitt des Gehäuses 2 um einen Gehäusestutzen handeln, an den sich in dessen weiterem Verlauf eine Abwinklung und/oder eine Erweiterung des Gehäuses anschließt, etc.

Figur 4a zeigt einen Längsschnitt durch den Kabelverschraubungseinsatz 1 und das Gehäuse 2 von Figur 3b entlang der Linie L-L von Figur 3b. Der Kabelverschraubungseinsatz 1 mit dem Kabel 3 ist mit dem in das Gehäuse 2 eingelegten Einsatzelement 10 vollständig montiert und fixiert. Eine elektrische Abschirmung 30 des im Inneren des Gehäuses 2 angeordneten und an einem Ende abisolierten Kabels 3 ist auf geeignete Weise mit dem Stutzen 16 in Kontakt gebracht. Dabei kann das Einsatzelement 10 mit dem Flansch 11 und das Gehäuse 2 vorteilhaft aus einem elektrisch leitenden Material bereitgestellt sein, so dass über deren Kontakt das Gehäuse 2 elektrisch abgeschirmt ist.

Der Flansch 11 ist in formschlüssigen und verdrehsicheren Kontakt mit der Abstufung 21 angeordnet und mittels der gegen die außenseitige Wand in der Umgebung der Gehäuseöffnung 200 verschraubten Gegenmutter 14 gegen die innenseitige Wand in der Umgebung der Gehäuseöffnung 200 des Gehäuses 2 gezogen, wonach der Kabelverschraubungseinsatz 1 an dem Gehäuse 2 fixiert ist. Der vollständig radial über den Rand 22 der Gehäuseöffnung 200 hinausragende Flansch 11 dichtet dabei das Gehäuse 2 mit dem Dichtelement 12 im Bereich der Abschrägung 220 des Rands 22 nach außen ab.

Gegenmutter 14 und Überwurfmutter 15 sitzen jeweils auf geeigneter Weise voneinander beabstandeten Bereichen 134 und 135 eines auf dem Einsatzelement 10 ausgebildeten Gewindes 13. Die ebenfalls verschraubte Überwurfmutter 15 beherbergt einen geeigneter Weise elastisch ausgebildeten korbähnlichen Kunststoffeinsatz 151, der sich auch teilweise in das Einsatzelement 10 hinein erstreckt und außerdem ein mit dem Kunststoffeinsatz 151 und der Überwurfmutter 15 zusammenwirkendes Dichtelement 152, die das Kabel 3 und das Einsatzelement 10 nach außen abdichten.

Figur 4b zeigt hierzu einen Querschnitt durch den Kabelverschraubungseinsatz 1 und das Gehäuse 2 von Figur 3b entlang der Linie R-R von Figur 3b, wobei bei dieser Ausführung die Gehäuseschalen 20 im Bereich der Abstufung 21 geeigneter Weise symmetrisch ausgebildet sind. Die Kontur 110 des Flansches 11 ist dabei vollständig formschlüssig in Kontakt mit der Innenkontur 210 der Abstufung 21, so dass der Kabelverschraubungseinsatz 1 mittels des Flansches 11 und der Abstufung 21 verdrehsicher angeordnet ist. Dabei zeigt Figur 4b eine Zusammenschau der Figuren 1c und 2b, weshalb hier auch auf die diesbezügliche Beschreibung verwiesen wird.

Figur 4c zeigt eine vergrößerte Darstellung des Ausschnitts A1 von Figur 4a, wobei an dem außenseitig und benachbart zu der Gehäuseöffnung 200 angeordneten Bereich des Einsatzelementes 10 mit dem Gewinde 13, 134 für die Gegenmutter 14 eine Stufung 11A ausgebildet ist. Wie der Flansch 11 innenseitig überragt dabei die Stufung 11A außenseitig vollständig den Rand 22 der Gehäuseöffnung 200, so dass mittels Stufung 11A, Rand 22 und Flansch 11 im Bereich der Gehäuseöffnung 200 eine vorteilhafte Verschachtelung von Gehäuse 2 und Einsatzelement 10 bereitgestellt ist. Korrespondierend mit der das Dichtelement 12 teilweise beherbergenden Abschrägung 220 des Rands 22 des Gehäuses 2 ist in dem Einsatzelement 10 außerdem geeigneter Weise eine zu dem Flansch 11 benachbarte Nut 120 ausgebildet, die das Dichtelement zusätzlich teilweise beherbergt.

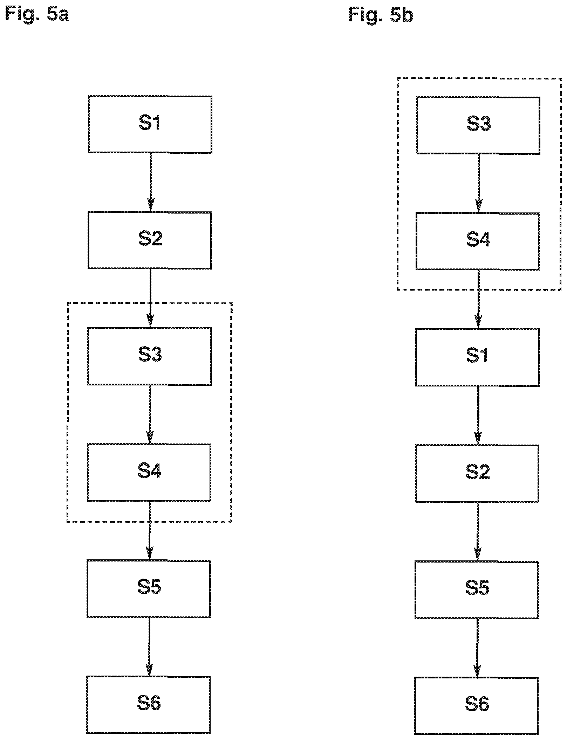

Figur 5a zeigt ein Flussdiagramm der wesentlichen Schritte eines Verfahrens zur Kabelverschraubung nach einer Ausführung der Erfindung unter Verwendung eines Kabelverschraubungseinsatzes 1 nach der Ausführung von Figur 1 bis 4 und einer Gehäuseschale 20 nach der Ausführung von Figur 2 bis 4 und eines Gehäuses 2 nach der Ausführung von Figur 3 und 4, weshalb hier für die nachfolgend genannten Bezugszeichen auch auf diese Zeichnungen Bezug genommen wird.

In einem ersten Schritt S1 wird das Kabel 3 und/oder eine Litze und/oder ein Kontakt und/oder ein an dem Kabel 3 bereits vorkonfektionierter Steckereinsatz eines bereits mit einem Kabelverschraubungseinsatz 1 versehenen Kabels 3 gemäß ihres jeweiligen bestimmungsgemäßen Einsatzes montiert, und in Schritt S2 wird das Kabel 3 eine vorbestimmte Lage des Inneren der Gehäuseschale 20 gebracht.

Der mit dem Kabel 3 versehene Kabelverschraubungseinsatz 1 wird in einem Schritt S3 in die Gehäuseöffnung 200 der Gehäuseschale 20 eingelegt, und in einem Schritt S4 wird der Flansch 11 des Kabelverschraubungseinsatzes 1 mit seiner Kontur 110 in Kontakt mit der Innenkontur 210 der Gehäuseschale 2 gebracht und dabei eine verdrehsichere Anordnung bereitgestellt. Gemäß der vorteilhaften Ausbildung der Innenkontur 210 als Abstufung 21 im Anschluss an den Rand 22 der Gehäuseöffnung 200 der Gehäuseschale 20 und damit des Gehäuses 2 kann bei dieser Ausführung Schritt S3 und Schritt S4 vorteilhaft in einem einzigen Schritt ausgeführt werden, weshalb Schritt S3 und S4 von einer gestrichelten Linie umrandet ist.

In einem Schritt S5 wird die Gehäuseschale 20 mit der weiteren gleichartigen Gehäuseschale 20 zusammengefügt, so dass das vollständige Gehäuse 2 wenigstens im Bereich seiner Gehäuseöffnung 200 mit dem Kabelverschraubungseinsatz 1 bereitgestellt ist.

In einem Schritt S6 wird die Gegenmutter 14 des Kabelverschraubungseinsatzes 1 verschraubt und damit an dem Gehäuse 2 fixiert wird, so dass ein Gehäuse 2 mit einem vollständig montierten Kabelverschraubungseinsatz 1 bereitgestellt ist;

Gemäß einer Abwandlung der vorstehenden Ausführung kann falls vorteilhaft auch Schritt S3 und Schritt S4 vor Schritt S1 ausgeführt werden. Diese Variante ist in Figur 5b dargestellt.

### Kabelverschraubung

### Bezugszeichenliste

- 1: Kabelverschraubungseinsatz
- 10: Einsatzelement
- 100: Öffnung
- 11: Flansch
- 110: Kontur
- 111: Abflachung
- 11A: Stufung
- 12: Dichtelement
- 120: Nut
- 13: Gewinde
- 134: Erster Gewindebereich
- 135: Zweiter Gewindebereich
- 14: Gegenmutter
- 15: Überwurfmutter
- 151: Kunststoffeinsatz
- 152: Dichtelement
- 16: Stutzen

- 2: Gehäuse
- 20: Gehäuseschale
- 200: Gehäuseöffnung
- 201: Abflachung
- 21: Abstufung
- 210: Innenkontur
- 211: Abflachung
- 22: Rand
- 220: Abschrägung
- 26: Vorsprung
- 260: Bohrung

- A: Achse
- A1: Ausschnitt, Bereich
- L: Längsschnitt
- R: Rand
- R1: Richtung
- S1, S2, S3, S4, S5, S6: Schritt

## Patentansprüche

1. Kabelverschraubung mit Kabelverschraubungseinsatz (1) und korrespondierend ausgebildeter Gehäuseschale (20) eines wenigstens zwei Gehäuseschalen (20) umfassenden Gehäuses (2), deren Trennebene durch die Gehäuseöffnung (200) verläuft, zum Einsatz und Befestigen des Kabelverschraubungseinsatzes (1) an dem Gehäuse (2), wobei der Kabelverschraubungseinsatz (1) ein Einsatzelement (10) umfasst, an dem ein mit dem Einsatzelement (10) einstückig, eine Kontur (110) aufweisender Flansch (11) ausgebildet ist, und wobei wenigstens eine der Gehäuseschalen (20) eine Innenkontur (210) aufweist, die mit der Kontur (110) derart korrespondiert, dass der Kabelverschraubungseinsatz (1) beim Einsatz seines Einsatzelementes (10) in die Gehäuseschale (20) mit der Kontur (110) seines Flansches (11) verdrehsicher in der Innenkontur (210) der Gehäuseschale (20) angeordnet ist, und wobei außerhalb des Gehäuses (2) an dem Einsatzelement (10) ein Gewinde (13) ausgebildet ist, auf dem eine Gegenmutter (14) sitzt, zur Fixierung des Kabelverschraubungseinsatzes (1) mittels Verschraubung der Gegenmutter (14) gegen eine äußere Wand in der Umgebung der Gehäuseöffnung (200) an dem Gehäuse (2), wobei der Flansch (11) gegen die innenseitige Wand in der Umgebung der Gehäuseöffnung gezogen wird.

2. Kabelverschraubung nach Anspruch 1, wobei die Kontur (110) des Flansches (11) kreisförmig mit wenigstens einer Abflachung (111) ausgebildet ist.

3. Kabelverschraubung nach Anspruch 1 oder 2, wobei an einem Rand (22) der Gehäuseöffnung (200) der wenigstens einen Gehäuseschale (20), innenseitig eine Abstufung (21) mit der Innenkontur (210) ausgebildet ist.

4. Kabelverschraubung nach Anspruch 3, wobei in der Gehäuseschale (20) benachbart zu der Abstufung (21) und dem Flansch (11) des Einsatzelementes (10) des Kabelverschraubungseinsatzes (1) wenigstens ein Vorsprung (26) vorgesehen ist, der im Zusammenwirken mit der innenseitigen Wand des Gehäuses (2) in der Umgebung der Gehäuseöffnung (200) eine schienenartige Führung des Flansches (11) bereitstellt, wobei der Vorsprung (26) eine Bohrung (260) zur Verschraubung zweier Gehäuseschalen (20) umfasst.

5. Kabelverschraubung nach Anspruch 3 oder 4, wobei an dem Flansch (11) ein Dichtelement (12) zur Abdichtung der Gehäuseöffnung (200) des Gehäuses (2) angeordnet ist, das in einer Nut (120) des Einsatzelementes (10) angeordnet ist, und wobei außerdem an dem inneren Rand (22) der Gehäuseöffnung (200) eine Abschrägung (220) zur teilweisen Beherbergung des Dichtelements (12) vorgesehen ist.

6. Kabelverschraubung nach einem der Ansprüche 3 bis 5, wobei das Einsatzelement (10) derart ausgebildet ist, dass der Rand (22) der Gehäuseöffnung (200) innenseitig mit dem Flansch (11) und außenseitig mit einer Stufung (11A) des Einsatzelementes (10) korrespondiert, so dass mittels des in das Gehäuse (2) eingelegten Einsatzelementes (10) im Bereich (A1) der Gehäuseöffnung (22) eine Verschachtelung von Einsatzelement (10) und Gehäuse (2) bereitgestellt ist.

7. Kabelverschraubung nach einem der Ansprüche 1 bis 6, wobei das Gehäuse (2) und das Einsatzelement (10) metallisch ausgebildet ist, und an dem Flansch (11) ein Stutzen (16) zur Befestigung einer elektrisch leitenden Abschirmung (30) eines in dem Kabelverschraubungseinsatz (1) angeordneten und sich in das Gehäuse (2) erstreckenden Kabels (3) ausgebildet ist.

8. Kabelverschraubung nach einem der Ansprüche 1 bis 7, wobei an dem Gewinde (13) des Einsatzelementes (10) außerdem eine Überwurfmutter (15) vorgesehen ist, die ein Dichtelement (152) beherbergt mit dem sie zusammenwirkt, wobei das Gewinde (13) einen ersten Gewindebereich (134) umfasst, der mit der Gegenmutter (14) zusammenwirkt, und einen zweiten Gewindebereich (135) umfasst, der mit der Überwurfmutter (15) zusammenwirkt, wobei der erste (134) und zweite (135) Gewindebereich voneinander beabstandet sind und/oder aus verschiedenen Gewinden bereitgestellt sind.

9. Kabelverschraubung nach einem der Ansprüche 1 bis 8, wobei das Gehäuse (2) ein Steckergehäuse für den Einsatz eines elektrischen Kabels (3) ist, das bereits mit einem Steckereinsatz vorkonfektioniert ist.

10. Kabelverschraubung nach einem der Ansprüche 1 bis 9, wobei die Gehäuseschale (20) als erste Halbschale des Gehäuses (2) ausgebildet ist, deren Trennebene mittig durch die Gehäuseöffnung (200) verläuft, wo bei die Gehäuseschale (20) mit einer im Wesentlichen gleichartig ausgebildeten zweiten Gehäuseschale (20) des Gehäuses (2) korrespondiert, und wobei mittels Zusammenfügen der ersten und zweiten Gehäuseschale (20) wenigstens in der Umgebung des Einsatzelementes (10) des Kabelverschraubungseinsatzes (1) das vollständige Gehäuse (2) bereitgestellt ist.

11. Verfahren zur Kabelverschraubung unter Verwendung einer Kabelverschraubung nach einem der Ansprüche 1 bis 10 mit den Schritten:
- Montage (S1) des Kabels (3) und/oder einer Litze und/oder eines Kontakts und/oder eines an dem Kabel (3) bereits vorkonfektionierten Steckereinsatzes gemäß ihres bestimmungsgemäßen Einsatzes;
- Positionierung (S2) des Kabels (3) in eine vorbestimmte Lage;
- Einlegen (S3) des Kabelverschraubungseinsatzes (1) in die Gehäuseöffnung (200) einer Gehäuseschale (20) des Gehäuses (2);
- verdrehsichere Anordnung (S4) des Flansches (11) des Kabelverschraubungseinsatzes (1) mit der Kontur (110) in Kontakt zu der Innenkontur (210) der Gehäuseschale (20);
- Zusammenfügen (S5) der Gehäuseschale (20) mit wenigstens einer weiteren Gehäuseschale (20);
- Verschraubung (S6) der Gegenmutter (14) des Kabelverschraubungseinsatzes (1), so dass der Kabelverschraubungseinsatz (1) an dem Gehäuse (2) fixiert wird.

12. Verfahren zur Kabelverschraubung nach Anspruch 11, wobei Schritt (S3) und Schritt (S4) in einem einzigen Schritt ausgeführt werden und/oder vor Schritt (S1) ausgeführt werden.

## Claims

1. Cable screw connection having a cable screw-connection insert (1) and a housing shell (20), of corresponding design, of a housing (2) comprising at least two housing shells (20), the parting plane of which runs through the housing opening (200), for the purpose of inserting and fastening the cable screw-connection insert (1) to the housing (2), wherein the cable screw-connection insert (1) comprises an insert element (10), on which a flange (11) that is in one piece with the insert element (10) and has a contour (110) is realized, and wherein at least one of the housing shells (20) has an inner contour (210) which corresponds to the contour (110) in such a manner that the cable screw-connection insert (1), when its insert element (10) is inserted into the housing shell (20), is arranged with the contour (110) of its flange (11) non-rotatably in the inner contour (210) of the housing shell (20), and wherein realized outside the housing (2), on the insert element (10), is a thread (13), seated on which there is a locknut (14), for fixing the cable screw-connection insert (1) to the housing (2) by means of screw-fastening of the locknut (14) against an outer wall in the vicinity of the housing opening (200), wherein the flange (11) is pulled against the inside wall in the vicinity of the housing opening.

2. Cable screw connection according to Claim 1, wherein the contour (110) of the flange (11) is circular with at least one flattened portion (111).

3. Cable screw connection according to Claim 1 or 2, wherein realized at an edge (22) of the housing opening (200) of the at least one housing shell (20), on the inside, is a gradation (21), having the inner contour (210).

4. Cable screw connection according to Claim 3, wherein provided in the housing shell (20), next to the gradation (21) and the flange (11) of the insert element (10) of the cable screw-connection insert (1), there is at least one projection (26) that, by acting in combination with the inside wall of the housing (2) in the vicinity of the housing opening (200), provides a runner-type guidance of the flange (11), wherein the projection (26) comprises a hole (260) for the purpose of screw-fastening two housing shells (20).

5. Cable screw connection according to Claim 3 or 4, wherein arranged on the flange (11) is a sealing element (12), for sealing the housing opening (200) of the housing (2), which is arranged in a groove (120) of the insert element (10), and wherein a bevel (220), for partially accommodating the sealing element (12), is additionally provided at an inner edge (22) of the housing opening (200).

6. Cable screw connection according to one of Claims 3 to 5,
wherein the insert element (10) is realized in such a manner that the edge (22) of the housing opening (200) corresponds on the inside to the flange (11) and on the outside to a stepping (11A) of the insert element (10), such that a nesting of the insert element (10) and the housing (2) is provided in the region (A1) of the housing opening (22) by means of the insert element (10) inserted into the housing (2).

7. Cable screw connection according to one of Claims 1 to 6,
wherein the housing (2) and the insert element (10) are made of metal, and realized on the flange (11) there is a gland (16) for fastening an electrically conductive shield (30) of a cable (3) that is arranged in the cable screw-connection insert (1) and extends into the housing (2).

8. Cable screw connection according to one of Claims 1 to 7,
wherein a sleeve nut (15), which accommodates a sealing element (152) and acts in combination with it, is also provided on the thread (13) of the insert element (10), wherein the thread (13) comprises a first threaded region (134), which acts in combination with the locknut (14), and a second threaded region (135), which acts in combination with the sleeve nut (15), wherein the first (134) and the second (135) threaded region are spaced apart from each other, and/or are provided from different threads.

9. Cable screw connection according to one of Claims 1 to 8,
wherein the housing (2) is a plug-in connector housing for the insertion of an electric cable (3), which is already preassembled with a plug-in connector insert.

10. Cable screw connection according to one of Claims 1 to 9,
wherein the housing shell (20) is realized as a first half-shell of the housing (2), the parting plane of which runs centrally through the housing opening (200), wherein the housing shell (20) corresponds to a second housing shell (20) of the housing (2) that is of substantially identical design, and wherein the complete housing (2) is provided by joining the first and the second housing shell (20), at least in the vicinity of the insert element (10) of the cable screw-connection insert (1).

11. Method for cable screw connection using a cable screw connection according to one of Claims 1 to 10, comprising the steps:
- fitting (S1) the cable (3) and/or a stranded wire and/or a contact and/or a plug-in connector insert already preassembled on the cable (3), according to its intended use;
- placing (S2) the cable (3) in a predetermined position;
- inserting (S3) the cable screw-connection insert (1) into the housing opening (200) of a housing shell (20) of the housing (2);
- arranging (S4) the flange (11) of the cable screw-connection insert (1) in a non-rotatable manner with the contour (110) in contact with the inner contour (210) of the housing shell (20);
- joining (S5) the housing shell (20) to at least one further housing shell (20);
- screw-fastening (S6) the locknut (14) of the cable screw-connection insert (1), such that the cable screw-connection insert (1) is fixed to the housing (2).

12. Method for cable screw connection according to Claim 11,
wherein step (S3) and step (S4) are executed in a single step, and/or are executed before step (S1).

## Revendications

1. Passe-câble à vis comportant un insert de passe-câble à vis (1) et une coque de boîtier (20), réalisée de manière correspondante, d'un boîtier (2) comportant au moins deux coques de boîtier (20), dont le plan de séparation passe par l'ouverture de boîtier (200), pour l'insertion et la fixation de l'insert de passe-câble à vis (1) au boîtier (2), l'insert de passe-câble à vis (1) comportant un élément d'insert (10), sur lequel est réalisée une collerette (11) d'une seule pièce avec l'élément d'insert (10) et comprenant un contour (110), et au moins l'une des coques de boîtier (20) comprenant un contour intérieur (210) qui correspond au contour (110) de telle sorte que l'insert de passe-câble à vis (1), lors de l'insertion de son élément d'insert (10) dans la coque de boîtier (20), est disposé avec le contour (110) de sa collerette (11) de manière bloquée en rotation dans le contour intérieur (210) de la coque de boîtier (20), et un filetage (13) étant réalisé sur l'élément d'insert (10) à l'extérieur du boîtier (2), filetage sur lequel repose un contre-écrou (14), pour la fixation de l'insert de passe-câble à vis (1) par vissage du contre-écrou (14) contre une paroi extérieure dans l'environnement de l'ouverture de boîtier (200) sur le boîtier (2), la collerette (11) étant tirée contre la paroi intérieure dans l'environnement de l'ouverture de boîtier.

2. Passe-câble à vis selon la revendication 1,
le contour (110) de la collerette (11) étant réalisé de manière circulaire avec au moins un aplatissement (111).

3. Passe-câble à vis selon la revendication 1 ou 2,
un échelonnement (21) avec le contour intérieur (210) étant réalisé du côté intérieur au niveau d'un bord (22) de l'ouverture de boîtier (200) de l'au moins une coque de boîtier (20).

4. Passe-câble à vis selon la revendication 3,
au moins une saillie (26) étant prévue dans la coque de boîtier (20) de manière adjacente à l'échelonnement (21) et à la collerette (11) de l'élément d'insert (10) de l'insert de passe-câble à vis (1), laquelle saillie, en coopération avec la paroi intérieure du boîtier (2), forme un guide de type rail de la" collerette (11) dans l'environnement de l'ouverture de boîtier (200), la saillie (26) comportant un alésage (260) pour le vissage de deux coques de boîtier (20).

5. Passe-câble à vis selon la revendication 3 ou 4,
un élément d'étanchéité (12) servant à réaliser l'étanchéité de l'ouverture de boîtier (200) du boîtier (2) étant disposé au niveau de la collerette (11), lequel élément d'étanchéité est disposé dans une rainure (120) de l'élément d'insert (10), et en outre un chanfrein (220) pour le logement partiel de l'élément d'étanchéité (12) étant prévu au niveau du bord intérieur (22) de l'ouverture de boîtier (200).

6. Passe-câble à vis selon l'une des revendications 3 à 5,
l'élément d'insert (10) étant réalisé de telle sorte que le bord (22) de l'ouverture de boîtier (200) correspond du côté intérieur à la collerette (11) et du côté extérieur à un échelonnement (11A) de l'élément d'insert (10), de sorte qu'au moyen de l'élément d'insert (10) introduit dans le boîtier (2), dans la région (A1) de l'ouverture de boîtier (22), un emboîtement de l'élément d'insert (10) et du boîtier (2) soit produit.

7. Passe-câble à vis selon l'une des revendications 1 à 6,
le boîtier (2) et l'élément d'insert (10) étant réalisés en métal et, au niveau de la collerette (11), une tubulure (16) pour la fixation d'un blindage électroconducteur (30) d'un câble (3) disposé dans l'insert de passe-câble à vis (1) et s'étendant dans le boîtier (2) étant réalisée.

8. Passe-câble à vis selon l'une des revendications 1 à 7,
en outre un écrou-raccord (15) étant prévu au niveau du filetage (13) de l'élément d'insert (10), lequel écrou-raccord loge un élément d'étanchéité (152) avec lequel il coopère, le filetage (13) comportant une première région de filetage (134) qui coopère avec le contre-écrou (14) et comportant une deuxième région de filetage (135) qui coopère avec l'écrou-raccord (15), la première (134) et la deuxième (135) région de filetage étant espacées l'une de l'autre et/ou étant produites à partir de filetages différents.

9. Passe-câble à vis selon l'une des revendications 1 à 8,
le boîtier (2) étant un boîtier de connecteur pour l'insertion d'un câble électrique (3), qui est déjà préfabriqué avec un insert de connecteur.

10. Passe-câble à vis selon l'une des revendications 1 à 9,
la coque de boîtier (20) étant réalisée sous forme de première demi-coque du boîtier (2), dont le plan de séparation passe centralement par l'ouverture de boîtier (200), la coque de boîtier (20) correspondant à une deuxième coque de boîtier (20), réalisée sensiblement de manière similaire, du boîtier (2), et le boîtier complet (2) étant produit par assemblage de la première et de la deuxième coque de boîtier (20) au moins dans l'environnement de l'élément d'insert (10) de l'insert de passe-câble à vis (1).

11. Procédé de vissage de câble à l'aide d'un passe-câble à vis selon l'une des revendications 1 à 10, comportant les étapes suivantes :
- montage (S1) du câble (3) et/ou d'un fil et/ou d'un contact et/ou d'un insert de connecteur déjà préfabriqué sur le câble (3) conformément à leur insertion de manière prévue ;
- positionnement (S2) du câble (3) dans une position prédéfinie ;
- introduction (S3) de l'insert de passe-câble à vis (1) dans l'ouverture de boîtier (200) d'une coque, de boîtier (20) du boîtier (2) ;
- disposition (S4) de manière bloquée en rotation de la collerette (11) de l'insert de passe-câble à vis (1) avec le contour (110) en contact avec le contour intérieur (210) de la coque de boîtier (20) ;
- assemblage (S5) de la coque de boîtier (20) avec au moins une autre coque de boîtier (20) ;
- vissage (S6) du contre écrou (14) de l'insert de passe-câble à vis (1), de telle sorte que l'insert de passe-câble à vis (1) soit fixé au boîtier (2).

12. Procédé de vissage de câble selon la revendication 11, l'étape (S3) et l'étape (S4) étant effectuées dans une étape unique et/ou étant effectuées avant l'étape (S1).
